# EUROPÄISCHE PATENTSCHRIFT

(11) **EP 4 113 359 B1**
(45) Veröffentlichungstag und Bekanntmachung des Hinweises auf die Patenterteilung: **23.10.2024**
(21) Anmeldenummer: 22178281.6
(22) Anmeldetag: 10.06.2022
(51) Int. Cl.: G06K 1/12, G06K 19/077, F16L 11/12

(54) **VERFAHREN ZUR HERSTELLUNG VON SCHLAUCH- UND ROHRLEITUNGEN MIT RFID-CHIPS**
METHOD FOR MANUFACTURING TUBING AND PIPELINES WITH RFID CHIPS
PROCÉDÉ DE FABRICATION DE TUYAUX ET DE CONDUITES À PUCES RFID

(30) Priorität: 30.06.2021 DE 102021206881; 20.08.2021 DE 102021209184
(43) Veröffentlichungstag der Anmeldung: 04.01.2023
(73) Patentinhaber: ContiTech Techno-Chemie GmbH, 61184 Karben (DE)
(72) Erfinder: Linzmaier, Markus, 30165 Hannover (DE); Borchert, Lukas, 30165 Hannover (DE); Reutter, Kilian, 30165 Hannover (DE); Zipf, Thomas, 30165 Hannover (DE)
(74) Vertreter: Continental Corporation

(56) Entgegenhaltungen:
- EP-A1- 3 699 471
- US-A1- 2013 284 299

## Beschreibung

Die Erfindung betrifft ein Verfahren zur Herstellung von Schlauch- und Rohrleitungsabschnitten mit RFID-Chips.

Schlauch- und Rohrleitungen sind teilweise ungünstigen Umwelt- und Betriebsbedingungen ausgesetzt, was insbesondere bei sicherheitsrelevanten Leitungen zur Folge hat, dass die Schlauch- und Rohrleitungen kontinuierlich überwacht werden müssen. Ist dies gegebenenfalls nicht möglich, ist es üblich, im Rahmen der vorbeugenden Instandhaltung Wechselintervalle festzulegen.

In beiden Fällen ist es notwendig, die Schlauch- und Rohrleitungen mindestens zu identifizieren und/oder aber mit einer kontinuierlich arbeitenden Sensorik auszustatten. Sowohl für die Identifikation als auch für die Signalübertragung von Sensoren haben sich in der Vergangenheit RFID-Chips etabliert, die auch im Bereich der Schlauch- und Rohrleitungstechnik zum Einsatz kommen.

Üblich sind RFID-Chips mit Antennen auf einem Trägermaterial in Form von Etiketten oder Streifen. Diese können nachträglich an der Schlauchaußenseite befestigt werden. Weiterhin ist es als Stand der Technik bekannt, dass die RFID-Chips auf Trägermaterial in Streifenform mit regelmäßigem Abstand zueinander und definierter Steigung um ein Kunststoffrohr gewunden bzw. spiralförmig aufgebracht werden. Die US 903 8670 B2 offenbart eine derartige Lösung.

Die nachträgliche Montage der RFID-Chips an der Schlauchaußenseite führt zu zusätzlichem Aufwand. Weitere Nachteile sind die Gefahr von Verlust oder Beschädigungen, fehlende Redundanz, die Verletzungsgefahr sowie die Ablagerungsmöglichkeiten von Verunreinigungen.

Die weitverbreiteten RFID-Chips auf Trägermaterial in Form von Etiketten oder Streifen eignen sich nicht zur Einbringung in den Schlauch während des Schlauchherstellungs-prozesses. Durch Form, Format und bauartbedingt ergeben sich negative Auswirkungen auf die Produktperformance wie beispielsweise Delamination der Schichten, die letztlich zum Ausfall des Schlauches führen können.

In der US 2019/0 27 69 82 A1 ist eine Lösung vorgeschlagen, bei der ein Seil mit einem RFID-Faden ausgestattet ist, wobei der RFID-Faden eine fadenartige Trägerstruktur aufweist, auf der in vorbestimmten Abständen RFID-Chips angeordnet sind.

Eine derartige Fadenstruktur lässt sich statt einer bandförmigen Struktur deutlich besser in eine Elastomer Schicht eines Schlauches einbetten. Das oben erwähnte spiralförmige Aufwickeln der RFID-Fäden erfordert aber eine entsprechende Wickelvorrichtung, die bei der Schlauch- und Rohrleitungsproduktion oftmals für die verschiedenen Verstärkungslagen in den Leitungen genutzt wird und daher nicht für weitere Wickelvorgänge zur Verfügung steht. Außerdem ist mit dem Aufwickeln, insbesondere bei Leitungen mit größeren Durchmessern, ein hoher Verbrauch an RFID-Fäden verbunden.

In der DE 10 2006 061 798 A1 ist ein Verfahren zur Anbringung von Kennzeichen auf Substratoberflächen mit Hilfe eines Transferverfahrens offenbart, bei dem unmittelbar von einer präparierten oder vorgedruckten Release-Trägerfolie eine auf der Release-Trägerfolie
befindliche Transferschicht auf die Substratoberfläche übertragen wird und dort ein nur unter Zerstörung entfernbares Haftbild entstehen lässt.

Bei diesem Verfahren ist eine Transferfolie erforderlich, auf die die RFID-Struktur mit Antennen aufgebracht wird, die dann auf den zu kennzeichnenden Gegenstand übertragen werden muss.

Abgesehen davon, dass das Verfahren die Transferfolie als zusätzliches Bauteil benötigt, ist es auch mit zusätzlichen Arbeitsschritten verbunden und bedarf einer entsprechenden Vorbereitung.

Der Erfindung liegt die Aufgabe zugrunde, die bekannten Verfahren zur Einbettung von RFID-Chips in Schlauch- und Rohrleitungen so weiterzubilden, dass die Einbettung ohne nennenswerte Beeinflussung der mechanischen Eigenschaften des Produkts und mit geringem Aufwand möglich ist.

Diese Aufgabe wird dadurch gelöst, dass auf die äußere Oberfläche eines Schlauch- oder Rohrleitungsrohlings in vorbestimmten axialen Abständen leitfähige Strukturen vorbestimmter Geometrie auf den Schlauch- oder Rohrleitungsrohling aufgebracht werden, und auf diese leitfähigen Strukturen jeweils ein RFID-Chip aufgesetzt wird, wobei die RFID-Chips mit der jeweiligen leitfähigen Struktur in elektrisch leitende Verbindung zu stehen kommen und der Schlauch- oder Rohrleitungsrohling mit den leitfähigen Strukturen und den aufgesetzten RFID-Chips zusammenvulkanisiert oder ausgehärtet und anschließend in Abschnitte vorbestimmter Länge zerteilt wird.

Dieses Verfahren hat den Vorteil, dass kein speziell ausgerüstetes Fadenmaterial bereitgestellt werden muss. Außerdem ist das Verfahren sehr flexibel, da der Abstand der RFID-Chips auf den als Antennen fungierenden leitfähigen Strukturen sehr einfach an die jeweiligen Ausführungsformen der Schlauch- oder Rohrleitungsrohlinge anpassbar ist.

In einer Weiterbildung der Erfindung sind die leitfähigen Strukturen mit einer elektrisch leitfähigen Tinte aufgedruckt.

Diese Verfahren ermöglicht eine kontinuierliche Fertigung der Rohlinge, wobei elektrisch leitfähige Tinten besonders gut zum Drucken geeignet sind.

In einer Weiterbildung der Erfindung werden die zur Zerteilung der fertig vulkanisierten Schlauch- oder Rohrleitung vorgesehenen Stellen durch die Erfassung der Lage der RFID-Chips auf der Schlauch- oder Rohrleitung und in vorbestimmten Abständen von der Lage der jeweiligen RFID-Chips bestimmt.

Dies hat den Vorteil, dass auf einfache Weise realisierbar ist, dass ein Schlauch- oder Rohrleitungsabschnitt immer genau einen RFID-Chip aufweist.

In einer Weiterbildung der Erfindung ist der Schlauch- oder Rohrleitungsrohling aus einem elastomeren Rohmaterial ausgebildet.

Elastomeren Rohmaterialien lassen sich zu sehr widerstandsfähigen Schlauch- oder Rohrleitungen vulkanisieren, wobei eine verschleißfeste Verbindung der elastomeren Rohmaterialien mit den elektrisch leitfähigen Strukturen erreicht wird..

In einer Weiterbildung der Erfindung ist der elastomere Schlauch- oder Rohrleitungsrohling aus TPE-Material ausgebildet und ist in fertiger Form ein Schutzschlauch gegen Scheuerschäden einer Schlauch- oder Rohrleitung.

Ein Schutzschlauch aus TPE Material verbessert die Abriebfestigkeit der Schlauch- oder Rohrleitung.

In einer Weiterbildung der Erfindung werden die elektrisch leitfähigen Strukturen einschließlich der aufgebrachten RFID-Chips mit einem Schutzüberzug gegen äußere Einflüsse ausgerüstet.

Ein solcher Schutzüberzug verbessert die Widerstandsfähigkeit gegen Abrieb der aufgebrachten Strukturen.

Die Erfindung betrifft weiter eine Vorrichtung zur Durchführung des erfindungsgemäßen Verfahrens.

Diese Vorrichtung ist dadurch gekennzeichnet, dass sie mindestens folgende Teile aufweist, nämlich
- eine Einrichtung zur Aufbringung von elektrisch leitfähigen Strukturen vorbestimmter Geometrie auf die äußere Oberfläche eines Schlauch- oder Rohrleitungsrohlings in vorbestimmten Abständen,
- eine Einrichtung zum Aufsetzen von RFID-Chips auf die elektrisch leitfähigen Strukturen, wobei die RFID-Chips mit der jeweiligen elektrisch leitfähigen Struktur in elektrisch leitende Verbindung zu stehen kommen und den Schlauch- oder Rohrleitungsrohling,
- eine Vulkanisations- oder aus Aushärteeinrichtung, in der der Schlauch- oder Rohrleitungsrohling mit den aufgebrachten elektrisch leitfähigen Strukturen und den aufgesetzten RFID-Chips zusammenvulkanisiert oder ausgehärtet wird.

Diese Anordnung erlaubt eine sehr flexible Gestaltung des erfindungsgemäßen Verfahrens.

In einer Weiterbildung der Erfindung ist die Einrichtung zur Aufbringung von linienförmigen elektrisch leitfähigen Strukturen ein Tintenstrahl-Druckkopf.

Ein Tintenstrahl-Druckkopf ist mit einfachen Mitteln programmierbar und erlaubt eine kontinuierliche, aber auch eine diskontinuierliche Aufbringung der elektrisch leitfähigen Strukturen.

In einer Weiterbildung der Erfindung weist die Vorrichtung weiter eine Einrichtung zur Erfassung der Lage von RFID-Chips auf der fertigen Schlauch- oder Rohrleitung, eine Vorschubeinrichtung und eine Zerteileinrichtung auf.

Eine derartige Anordnung ermöglicht, das Zerteilen der fertigen Schlauch- oder Rohrleitung in Abhängigkeit von der Lage der RFID-Chips zu realisieren, sodass sichergestellt ist, dass nach dem zerteilen jeder Schlauch- oder Rohrleitungsabschnitt genau einen RFID Chip aufweist.

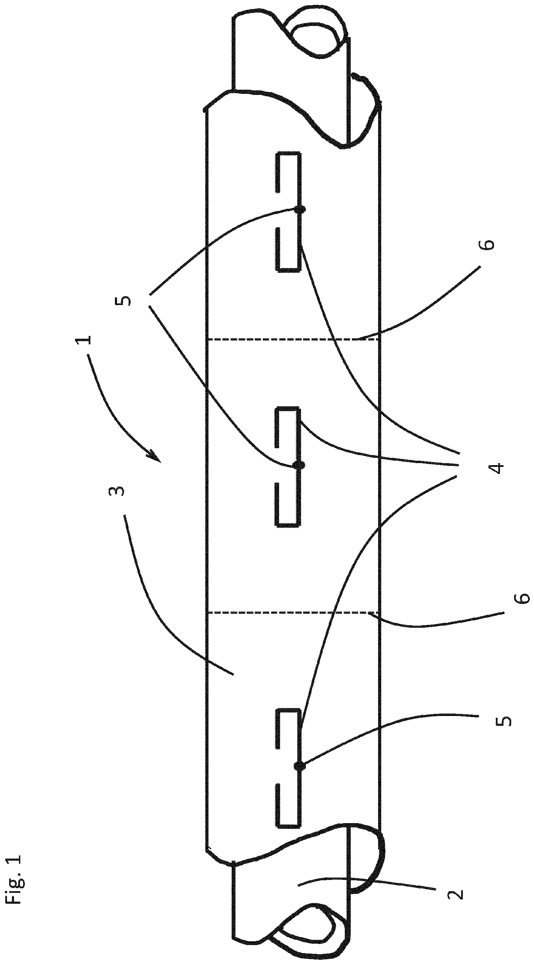

Anhand der Zeichnung wird nachstehend ein Beispiel der Erfindung näher erläutert. In der Fig. 1 ist ein mögliches Ergebnis des erfindungsgemäßen Verfahrens in einer Prinzipskizze gezeigt. Eine Schlauchleitung 1 weist einen inneren Grundschlauch 2 aus elastomerem Material auf. Um den Grundschlauch 2 herum ist ein TPE-Schutzschlauch 3 angeordnet, der um den Grundschlauch 2 herum extrudiert ist.

Nach der Extrusion des TPE-Schutzschlauchs 3 werden in vorbestimmten, nicht zwingend gleichen Abständen elektrisch leitfähige Strukturen 4 auf die Oberfläche des TPE-Schutzschlauchs 3 aufgedruckt, wobei leitfähige Tinten zum Einsatz kommen. Im vorliegenden Beispiel weisen die elektrisch leitfähigen Strukturen 4 eine Form in etwa eines großen "C" auf. Auf diese elektrisch leitfähigen Strukturen 4 werden RFID-Chips 5 so aufgesetzt, dass sie mit der jeweiligen elektrisch leitfähigen Struktur in elektrischem Kontakt stehen.

Bei einer anschließenden Vulkanisation bzw. Aushärtung des Schutzschlauches 3 werden sowohl die elektrisch leitfähigen Strukturen 4 als auch die RFID-Chips 5 mit dem elastomeren Material des Schutzschlauches 3 fest verbunden. Die jeweilige elektrisch leitfähige Struktur 4 dient dann als Antenne für die RFID-Chips 5.

Bei der nachfolgenden Zerteilung der fertigen Schlauch- oder Rohrleitung 1 dienen die RFID-Chips 5 als Markierung, sodass eine entsprechende, hier nicht gezeigte Zerteileinrichtung an den von den RFID-Chips 5 getriggerten und in vorbestimmten Abständen von den RFID-Chips 5 angeordneten Stellen 6 die Schlauch- oder Rohrleitung 1 in einzelne Abschnitte zerteilt werden kann, wodurch sichergestellt ist, dass jeder Abschnitt genau einen RFID-Chip 5 aufweist und kein RFID-Chip 5 bei der Zerteilung zerstört wird.

### Bezugszeichenliste

### (Teil der Beschreibung)

- 1: Schlauch- oder Rohrleitungsrohling
- 2: Grundschlauch des Schlauch- oder Rohrleitungsrohlings 1
- 3: TPE-Schutzschlauch
- 4: elektrisch leitfähige Strukturen
- 5: RFID-Chips
- 6: vorbestimmte Stellen zum Zerteilen der fertigen Schlauch- oder Rohrleitung

## Patentansprüche

1. Verfahren zur Herstellung von Schlauch- und Rohrleitungen (1) mit RFID-Chips (5), **dadurch gekennzeichnet, dass** auf die äußere Oberfläche eines Schlauch- oder Rohrleitungsrohlings (1) in vorbestimmten axialen Abständen elektrisch leitfähige Strukturen (4) vorbestimmter Geometrie aufgebracht werden, und auf diese elektrisch leitfähigen Strukturen (4) jeweils ein RFID-Chip (5) aufgesetzt wird, wobei die RFID-Chips (5) mit der jeweiligen elektrisch leitfähigen Struktur (4) in elektrisch leitende Verbindung zu stehen kommen und der Schlauch- oder Rohrleitungsrohling (1) mit den aufgebrachten elektrisch leitfähigen Strukturen (4) und den aufgesetzten RFID-Chips (5) zusammenvulkanisiert oder ausgehärtet und anschließend in Abschnitte vorbestimmter Länge zerteilt wird.

2. Verfahren nach Anspruch 1, **dadurch gekennzeichnet, dass** die elektrisch leitfähigen Strukturen (4) mit einer elektrisch leitfähigen Tinte aufgedruckt sind.

3. Verfahren nach Anspruch 1 oder 2, **dadurch gekennzeichnet, dass** die zur Zerteilung der fertig vulkanisierten Schlauch- oder Rohrleitung vorgesehenen Stellen (6) durch die Erfassung der Lage der RFID-Chips (5) auf der fertigen Schlauch- oder Rohrleitung und in vorbestimmten Abständen von der Lage der jeweiligen RFID-Chips (5) bestimmt werden.

4. Verfahren nach Anspruch 1, 2 oder 3, **dadurch gekennzeichnet, dass** der Schlauch- oder Rohrleitungsrohling (1) aus einem elastomeren Rohmaterial ausgebildet ist.

5. Verfahren nach Anspruch 4, **dadurch gekennzeichnet, dass** der elastomere Schlauch- oder Rohrleitungsrohling (1) aus TPE-Material ausgebildet und in fertiger Form ein Schutzschlauch (3) gegen Scheuerschäden der fertigen Schlauch- oder Rohrleitung ist.

6. Verfahren nach mindestens einem der vorstehenden Ansprüche, **dadurch gekennzeichnet, dass** die elektrisch leitfähigen Strukturen (4) einschließlich der aufgebrachten RFID-Chips (5) mit einem Schutzüberzug gegen äußere Einflüsse ausgerüstet werden.

7. Vorrichtung zur Durchführung des Verfahrens nach einem der vorstehenden Ansprüche, **dadurch gekennzeichnet, dass** sie mindestens folgende Teile aufweist, nämlich
- eine Einrichtung zur Aufbringung von elektrisch leitfähigen Strukturen (4) vorbestimmter Geometrie auf die äußere Oberfläche eines Schlauch- oder Rohrleitungsrohlings (1) in vorbestimmten Abständen,
- eine Einrichtung zum Aufsetzen von RFID-Chips (5) auf die elektrisch leitfähigen Strukturen (4), wobei die RFID-Chips (5) mit der jeweiligen elektrisch leitfähigen Struktur (4) in elektrisch leitende Verbindung zu stehen kommen,
- eine Vulkanisations- oder aus Aushärteeinrichtung, in der der Schlauch- oder Rohrleitungsrohling (1) mit den aufgebrachten elektrisch leitfähigen Strukturen (4) und den aufgesetzten RFID-Chips (5) zusammenvulkanisiert oder ausgehärtet wird.

8. Vorrichtung nach Anspruch 7, **dadurch gekennzeichnet, dass** die Einrichtung zur Aufbringung der elektrisch leitfähigen Strukturen (4) als Tintenstrahl-Druckkopf ausgebildet ist.

9. Vorrichtung nach Anspruch 7 oder 8, **dadurch gekennzeichnet, dass** die Vorrichtung weiter eine Einrichtung zur Erfassung der Lage von RFID-Chips (5) auf der fertigen Schlauch- oder Rohrleitung, eine Vorschubeinrichtung und eine Zerteileinrichtung aufweist.

## Claims

1. Method for producing hoselines and pipelines (1) with RFID chips (5), **characterized in that** electrically conductive structures (4) of predetermined geometry are applied to the outer surface of a hoseline or pipeline blank (1) in a manner spaced at predetermined axial distances, and respective RFID chips (5) are placed onto these electrically conductive structures (4), in which case the RFID chips (5) become electrically conductively connected to the respective electrically conductive structure (4), and the hoseline or pipeline blank (1) with the applied electrically conductive structures (4) and the placed RFID chips (5) is vulcanized together or cured and subsequently divided into sections of predetermined length.

2. Method according to Claim 1, **characterized in that** the electrically conductive structures (4) are printed using an electrically conductive ink.

3. Method according to Claim 1 or 2, **characterized in that** the locations (6) provided for dividing the finished vulcanized hoseline or pipeline are determined by the detection of the position of the RFID chips (5) on the finished hoseline or pipeline and at predetermined distances from the position of the respective RFID chips (5).

4. Method according to Claim 1, 2 or 3, **characterized in that** the hoseline or pipeline blank (1) is formed from an elastomeric raw material.

5. Method according to Claim 4, **characterized in that** the elastomeric hoseline or pipeline blank (1) is formed from TPE material and in finished form is a protective hose (3) against abrasion damage to the finished hoseline or pipeline.

6. Method according to at least one of the preceding claims, **characterized in that** the electrically conductive structures (4) including the applied RFID chips (5) are equipped with a protective covering against external influences.

7. Apparatus for carrying out the method according to any of the preceding claims, **characterized in that** it comprises at least the following parts, namely
- a device for applying electrically conductive structures (4) of predetermined geometry to the outer surface of a hoseline or pipeline blank (1) in a manner spaced at predetermined distances,
- a device for placing RFID chips (5) onto the electrically conductive structures (4), in which case the RFID chips (5) become electrically conductively connected to the respective electrically conductive structure (4),
- a vulcanization or curing device, in which the hoseline or pipeline blank (1) with the applied electrically conductive structures (4) and the placed RFID chips (5) is vulcanized together or cured.

8. Apparatus according to Claim 7, **characterized in that** the device for applying the electrically conductive structures (4) is embodied as an inkjet printhead.

9. Apparatus according to Claim 7 or 8, **characterized in that** the apparatus furthermore comprises a device for detecting the position of RFID chips (5) on the finished hoseline or pipeline, a feed device and a dividing device.

## Revendications

1. Procédé de fabrication de tuyaux et de conduites (1) à puces RFID (5), **caractérisé en ce que** des structures (4) électriquement conductrices de géométrie prédéterminée sont appliquées à intervalles axiaux prédéterminés sur la surface extérieure d'une ébauche (1) de tuyau ou de conduite, et respectivement une puce RFID (5) est mise en place sur ces structures (4) électriquement conductrices, dans lequel les puces RFID (5) sont mises en liaison électriquement conductrice avec la structure (4) électriquement conductrice respective, et l'ébauche (1) de tuyau ou de conduite pourvue des structures (4) électriquement conductrices appliquées et des puces RFID (5) mises en place est co-vulcanisée ou durcie et ensuite divisée en tronçons d'une longueur prédéterminée.

2. Procédé selon la revendication 1, **caractérisé en ce que** les structures (4) électriquement conductrices sont imprimées avec une encre électriquement conductrice.

3. Procédé selon la revendication 1 ou 2, **caractérisé en ce que** les emplacements (6) prévus pour la division du tuyau ou de la conduite vulcanisé(e) fini(e) sont déterminés par la détection de la position des puces RFID (5) sur le tuyau ou la conduite fini(e) et à des distances prédéterminées de la position des puces RFID (5) respectives.

4. Procédé selon la revendication 1, 2 ou 3, **caractérisé en ce que** l'ébauche (1) de tuyau ou de conduite est formée à partir d'un matériau brut élastomère.

5. Procédé selon la revendication 4, **caractérisé en ce que** l'ébauche (1) de tuyau ou de conduite est réalisée à partir d'un matériau TPE, et est sous forme finie un tuyau de protection (3) contre les dégâts par frottement du tuyau ou de la conduite fini(e).

6. Procédé selon au moins l'une des revendications précédentes, **caractérisé en ce que** les structures (4) électriquement conductrices, y compris les puces RFID (5) appliquées, est équipée d'un revêtement protecteur contre les influences extérieures.

7. Dispositif permettant d'exécuter le procédé selon l'une des revendications précédentes, **caractérisé en ce qu'**il comprend au moins les parties suivantes, à savoir
- un équipement pour appliquer des structures (4) électriquement conductrices d'une géométrie prédéterminée sur la surface extérieure d'une ébauche (1) de tuyau ou de conduite à des intervalles prédéterminés,
- un équipement pour mettre en place des puces RFID (5) sur la structure (4) électriquement conductrice, les puces RFID (5) étant mises en liaison électriquement conductrice avec la structure (4) électriquement conductrice respective,
- un équipement de vulcanisation ou de durcissement dans lequel l'ébauche (1) de tuyau ou de conduite est co-vulcanisée ou durcie avec les structures (4) électriquement conductrices appliquées et les puces RFID (5) mises en place.

8. Dispositif selon la revendication 7, **caractérisé en ce que** l'équipement permettant d'appliquer les structures (4) électriquement conductrices est réalisé sous la forme d'une tête d'impression à jet d'encre.

9. Dispositif selon la revendication 7 ou 8, **caractérisé en ce que** le dispositif présente en outre un équipement pour détecter la position de puces RFID (5) sur le tuyau ou la conduite fini(e), un équipement d'avance et un équipement de division.
